# EUROPÄISCHE PATENTSCHRIFT

(11) **EP 1 117 532 B1**
(45) Veröffentlichungstag und Bekanntmachung des Hinweises auf die Patenterteilung: **09.11.2005**
(21) Anmeldenummer: 99940059.1
(22) Anmeldetag: 27.07.1999
(51) Int. Cl.: B32B 27/08, B65D 65/40

(54) **GASDICHTE KASCHIERFOLIE UND DARAUS HERGESTELLTE PACKSTOFFE**
GAS-TIGHT LAMINATING FILM AND PACKAGING MATERIAL PRODUCED THEREFROM
FEUILLE DE COUCHAGE ETANCHE AUX GAZ ET MATERIAU D'EMBALLAGE FABRIQUE AVEC CETTE FEUILLE

(30) Priorität: 07.08.1998 DE 19835745
(43) Veröffentlichungstag der Anmeldung: 25.07.2001
(73) Patentinhaber: Wipak Walsrode GmbH & Co. KG, 29656 Walsrode (DE)
(72) Erfinder: EGGERS, Holger, D-29664 Walsrode (DE); KASCHEL, Gregor, D-29699 Bomlitz (DE)
(74) Vertreter: Kutzenberger, Helga
(86) Internationale Anmeldenummer: PCT/EP1999/005369
(87) Internationale Veröffentlichungsnummer: WO 2000/007815

(56) Entgegenhaltungen:
- WO-A-95/33621
- GB-A- 2 134 446
- US-A- 5 298 326

## Beschreibung

Die vorliegende Erfindung betrifft eine siegelbare, mehrschichtige Kaschierfolie aufgebaut aus wenigstens sechs Schichten aus im wesentlichen thermoplastischen Kunststoffen mit einer inneren Schicht aus Ethylen/Vinylalkohol-Copolymer (EVOH) sowie einen diese Kaschierfolie als Siegelschicht enthaltenden Packstoff.

Die Erfindung umfaßt auch Packstoffe, die eine solche Kaschierfolie als Siegelschicht enthalten. Gegenstand der Erfindung ist ebenso die Verwendung der Kaschierfolie sowie der diese enthaltenden Packstoffe für die Herstellung von Packmitteln sowie die Verwendung dieser Packmittel für die Verpackung von Lebensmitteln und anderen Gütern.

Viele Güter erfordern für Transport und/oder Lagerung einen Schutz vor der Umgebungsluft oder der umgebenden Atmosphäre. Sie müssen daher in einer Weise verpackt werden, die geeignet ist, alle oder bestimmte Bestandteile der Umgebungsatmosphäre möglichst vollständig auszuschließen. Ein insbesondere kritischer Bestandteil der Umgebungsatmosphäre ist Sauerstoff. Die Anwesenheit von Sauerstoff kann bei vielen Packgütern, wie beispielsweise Lebensmitteln, zu einem oxidativen Verderb oder einem Wachstum für ebenfalls das Packgut verderbende Keime führen.

Solche Packungen werden in vielen Fällen durch Heißversiegelung einer oder mehrerer üblicher Packstoffe zu einer Verpackung, beispielsweise einem Beutel oder einem Deckelbehälter, hergestellt. Dabei wird der Packstoff durch Verschmelzen der Siegelschicht, im Beispiel des Beutels gegen sich selbst oder im Fall einer Deckelverpackung gegen die Siegelschicht eines anderen Packstoffs, fest verschlossen. Es entsteht eine die Verpackung verschließende Siegelnaht.

An die Siegelnaht werden in vielen Fällen sehr hohe Anforderungen gestellt. So muß die Siegelnaht hohe mechanische Belastungen durch Füllgut, Transport oder andere Einflüsse aufnehmen können. Dies gilt in vielen Fällen bereits unmittelbar nach der Versiegelung bei noch heißer Siegelnaht. So wird etwa in sogenannten Vertikalen Schlauchbeutelmaschinen aus Zeitgründen das Füllgut noch bei geschlossenem Quersiegelwerkzeug in den geformten Schlauch gegeben. Bei Öffnung der Siegelbacken lastet das gesamte Füllgutgewicht auf der noch nicht erkalteten Siegelnaht und setzt diese dadurch einer Zugbeanspruchung aus. In anderen Fällen kann es auch ohne äußere Belastung allein durch das elastische Rückstellvermögen des Packstoffs etwa bei Versiegelung einer Falte oder im Umschlagbereich des Packstoffs zu einer gleichartigen Belastung der noch warmen Siegelnaht kommen. Bei zu geringem Zusammenhalt der Siegelnaht kommt es in solchen Fällen zum Aufzug der Naht und damit einem Versagen der Packung. Die Nahtfestigkeit im warmen Zustand unmittelbar nach der Versiegelung wird üblicherweise als Hottack bezeichnet. Ein hoher Hottack ist in Fällen wie dem oben geschilderten eine wichtige Voraussetzung für hohe Abpackgeschwindigkeiten.

Eine Meßmethode für die Eigenschaft Hottack ist im Zusammenhang mit den erfindungsgemäßen Beispielen angegeben. Qualitativ erfolgt die Messung in der Art und Weise, daß zwei Packstoffabschnitte mit einem definierten Druck bei einer bestimmten Temperatur und für eine gegebene Zeit in Kontakt gebracht und anschließend, während die Siegelnaht noch heiß ist, auseinandergezogen werden. Von besonderer Bedeutung ist hier, ob und in welcher Höhe eine Zeitverzögerung zwischen dem Ablösen des Siegelwerkzeugs und dem Aufbringen der Kraft zugelassen wird. Es kann die beim Auseinanderziehen vom Packstoff aufnehmbare maximale Kraft oder bei Vorgabe einer Kraft die resultierende Deformation der Siegelnaht gemessen werden. Grundsätzlich ist zwischen der Hottack-Kraft als der maximalen von der Siegelnaht nach der Versiegelung ohne Versagen aufnehmbaren Kraft und dem Hottack-Temperaturbereich als dem Temperaturbereichen, bei dem bei ansonsten gegebenen Siegelbedingungen ein Mindestniveau der Hottack-Kraft erzielt werden kann, zu unterscheiden.

Daneben muß die Siegelnaht im wieder erkalteten Zustand eine feste Versiegelung bilden, d.h. sie muß in diesem Zustand hohe Belastungen, denen die Verpackung bei Transport oder Lagerung ausgesetzt sein kann, ohne mechanisches Versagen aufnehmen können. Eine solchermaßen feste Siegelnaht muß als zusätzliche Bedingung für einen effizienten, d.h. schnellen und fehlerfreien Abpackvorgang mit möglichst kurzen Siegelzeiten zu erreichen sein.

Treten Hohlräume, sogenannte Kanülen, zwischen dem Inneren und dem Äußeren der Packung auf, kommt es zu einem Eindringen der umgebenden Atmosphäre und damit unter Umständen zu einer Schädigung des Füllguts. Hier ist insbesondere das Versiegeln von Falten kritisch. So kann die Packung gezielt, etwa in Form einer Längsfalte an der Seite eines Beutels oder im Schnittpunkt von Längs- und Quernaht, bzw. ungewollt bei schlechter Führung in der Maschine Falten enthalten, die bis in die Siegelnaht hineinreichen. Für eine dichte Versiegelung einer solchen Falte muß die Siegelschicht beim Siegelvorgang schnell und nachhaltig verformbar sein, um den Bereich um die und in der Falte vollständig auszufüllen, so daß es entlang der Siegelnaht auch im Faltenbereich zu einem durchgehenden Kontakt der Innenflächen der Siegelschicht bzw. der Siegelschichten kommt. Erfordert das Erreichen einer dichten Versiegelung zu lange Siegelzeiten, so reduziert sich wiederum die Verarbeitungsgeschwindigkeit der Folie auf der Verpackungsmaschine.

Die bei einem Siegelvorgang ablaufenden Teilschritte sind in *Meka und Stehling, Heat Sealing of Semicrystalline Polymer Films. II. Effect of Melting Distribution on Heat-Sealing Behavior of Polyolefins, Journal of Applied Polymer Science, Vol. 51, S. 105-119 (1994),* modellhaft dargestellt. So erfolgt zunächst durch Aufschmelzen und Druck eine Benetzung in der Siegelnaht. Im weiteren Verlauf diffundieren Kettensegmente der Polymere von beiden Seiten der Siegelnaht in die jeweils gegenüberliegende Seite hinein und erzeugen so molekulare Verschlaufungen über die Naht hinweg. Nach Entfernung des Siegelwerkzeugs erkaltet die Naht, und es kommt bei teilkristallinen Werkstoffen auch zur Ausbildung von Kristallen über die Naht hinweg. Wird unmittelbar nach Entfernung des Siegelwerkzeugs die Siegelnaht mechanisch belastet, so müssen die Polymere der Siegelnaht also eine genügend hohe Sehmelzefestigkeit aufweisen, um diese Beanspruchung aufnehmen zu können.

Die obengenannten kurzen Siegelzeiten können insbesondere dadurch erreicht werden, daß die geforderten Eigenschaften wie hohe Siegelfestigkeit, hoher Hottack und hermetisch dichte Versiegelung bei niedrigen Temperaturen erreicht werden. Auf diese Weise kann bei gegebener Temperatur des Siegelwerkzeugs - in vielen Fällen wird diese durch die Temperaturbeständigkeit des Trägers bzw. Substrats des Packstoffs limitiert - in kürzerer Zeit eine zur Erfüllung der genannten Anforderungen ausreichend hohe Temperatur in der Siegelnaht erreicht werden.

Für alle weiteren Darlegungen gelten die folgenden Begriffe, Meßmethoden und Festlegungen:
- Für die Beschreibung der in den einzelnen Schichten enthaltenen Polymere werden, wenn nicht anderweitig kenntlich gemacht, Kurzzeichen für Kunststoffe nach DIN 7728 bzw. ISO 1043-1987 (E) verwendet.
- Bei mehrschichtigen Aufbauten wird die Schichtenfolge durch eine Aneinanderreihung der Kurzzeichen der Polymere der entsprechenden Schichten oder anderweitig erläuterter Symbole, voneinander getrennt durch senkrechte Striche, wiedergegeben. Die Seite der Siegelschicht ist dabei stets rechts. Dabei kann auch nur ein Teil der gesamten, den Aufbau ausmachenden, Schichtenfolge angegeben werden. In diesen Fällen ist ebenfalls die Seite der Siegelschicht stets rechts und nicht angegebene Schichten oder Kombinationen von Schichten durch drei Punkte, ..., kenntlich gemacht. Gleichartige Polymere können durch eine Numerierung voneinander unterschieden werden, beispielsweise in der Form PE-LD-1|PE-LD-2|PE-LD-3. Mischungen aus unterschiedlichen Polymeren werden durch das Kennzeichen + sowie die Zusammenfassung der Komponenten in Klammern, ( ), kenntlich gemacht. Gegebenenfalls können hier zusätzlich Angaben zur prozentualen Zusammensetzung gemacht werden. Wenn nicht anders angegeben handelt es sich in solchen Fällen stets um Gewichtsanteile, die auf das Gesamtgewicht der Mischung bezogen sind. So beschreibt beispielsweise der Ausdruck ...|PA|EVOH|...|(PE-LD-1+PE-LLD)|d einen Aufbau mit einer nicht spezifizierten Außenschicht oder außenliegenden Schichtenfolge, gefolgt von einer im wesentlichen aus Polyamid bestehenden Schicht, gefolgt von einer im wesentlichen aus Ethylen/Vinylalkohol-Copolymerisat (EVOH) bestehenden Schicht, gefolgt von einer nicht spezifizierten Schicht oder Schichtenfolge, gefolgt von einer Schicht, die eine Mischung aus einem mit der Nummer 1 versehenem Polyethylen niedriger Dichte (PE-LD-1) und einem Ethylen/α-Olefin-Copolymerisat (PE-LLD) umfaßt, sowie einer mit d näher zu spezifizierenden, auf der Siegelseite folgenden Schicht.
- Schichten, die primär der mechanischen Verbindung der beidseitig an sie angrenzenden Schichten dienen, werden im folgenden durch ...|HV|... bezeichnet, wobei HV als Abkürzung für Haftvermittler dient. Typische als Haftvermittler verwendete Polymere werden weiter unten beschrieben.
- Die Angabe von Schmelzpunkten bezieht sich im folgenden auf den nach ASTM 3418 mit DSC-Analyse (Differential Scanning Calorimetry Analyse) bestimmten Wert.
- Die Angabe von Erweichungspunkten bezieht sich im folgenden auf den nach ISO 306 bestimmten Wert.
- Die Angabe von Schmelzflußraten bezieht sich im folgenden auf den nach DIN ISO 1133 bestimmten Wert. Erfolgen keine weiteren Angaben, wird als Meßbedingung in Form der Temperatur sowie der Auflagemasse Bedingung D in DIN ISO 1133 mit einer Temperatur von 190°C und einer Auflagemasse von 2,16 kg vorausgesetzt.
- Die Dichte der Rohstoffe bezieht sich auf die Meßmethode entsprechend ISO 1183 (A).

Mit Aufbauten von sauerstoffsperrenden Siegelschichten in Packstoffen nach dem Stand der Technik läßt sich, wie im folgenden erläutert wird, sowohl ein hoher Hottack als auch eine gute Kanülendichtigkeit nicht gleichzeitig erreichen.

Eine hohe Hottack-Kraft wird bei Siegelschichten durch Wahl des Polymers erzielt. Copolymere aus Ethylen und Acrylsäuren (E/AA, E/MAA) ermöglichen aufgrund der auch bei hohen Temperaturen wirksamen Wasserstoffbrückenbindungen zwischen den Molekülen hohe Hottack-Kräfte und breite Hottack-Temperaturbereiche. Dies gilt wegen der ionischen Bindungskräfte in noch höherem Maße für Ionomere, neutralisierte Säurecopolymere, die Metallionen enthalten. Die Verwendung von Säurecopolymeren und Ionomeren ist jedoch insofern nachteilig, als daß sie bei höheren Säuregehalten und/oder Neutralisationsgraden, die die genannten Eigenschaften erst ermöglichen, ihrerseits nicht mit Polyethylen-basierenden Polymeren verträglich sind. Dies macht eine Verwendung der Siegelschicht zur Versiegelung mit einer weiteren Polyethylen-basierenden Siegelschicht, etwa in einer Deckelverpackung, wegen der geringen so erreichbaren Siegelnahtfestigkeit unmöglich.

Bei unpolaren Siegelmedien wie Polyethylen niedriger und hoher Dichte (PE-LD, PE-HD), Copolymerisaten aus Ethylen und α-Olefinen (PE-LLD), Copolymerisaten aus Ethylen und Propylen (E/P) oder Polypropylen (PP) läßt sich ein höherer Hottack erfahrungsgemäß bei verringertem MFR, d.h. mit längerkettigen Polymeren sowie durch geringere Langkettenverzweigung erzielen. Im Falle von PE-LLD läßt sich mit Typen, die unter Verwendung von Metallocen-Katalysatoren hergestellt werden, im folgenden als mPE-LLD bezeichnet, und die im Vergleich zu herkömmlichen mit Ziegler-Natta-Katalysatoren produzierten Typen eine engere Molmassenverteilung sowie eine gleichmäßigere Verteilung des Comonomeranteils über die Moleküle verschiedener Länge aufweisen, die Hottack-Kraft deutlich verbessern. Eine Erhöhung der Dichte bewirkt in allen Fällen nur eine geringe Veränderung der Hottack-Kraft, der Temperaturbereich wird jedoch zu höheren Werten hin verschoben.

Copolymerisate aus Ethylen und Vinylacetat (EVA) oder Ethylen und ungesättigten Estern wie Butylacrylat oder Ethylacrylat (E/BA, E/EA) erreichen zwar mit steigendem Comonomergehalt niedrigere Siegeltemperaturen, die Hottack-Kraft nimmt jedoch ebenfalls ab.

Zum Erreichen einer guten Kanülendichtigkeit werden üblicherweise Polymere mit niedrigem Schmelzpunkt und hohem MFR, d.h. niedriger Viskosität, eingesetzt. Auf diese Weise kann das Polymer der Siegelschicht schon bei niedrigen Siegeltemperaturen in unregelmäßig geformte Abschnitte der Siegelnaht, wie etwa im Bereich von Falten, hineinfließen und sie auf diese Art und Weise verschließen. Diese Materialien zeigen in der Regel jedoch ein schlechtes Hottack.

Der Anforderung nach einer hohen Siegelfestigkeit bei kurzen Siegelzeiten kann ebenfalls durch gezielte Wahl des oder der die Siegelschicht bildenden Polymere nachgekommen werden. So läßt sich mit Polymeren, die selbst eine hohe Reißfestigkeit aufweisen auch eine gute Siegelnahtfestigkeit erzielen. Solche Polymere sind insbesondere Copolymerisate aus Ethylen und α-Olefinen (PE-LLD) im Bereich höherer Dichten, d.h. mit Dichten oberhalb ca. 0,910 g/cm³. Hiermit sind jedoch keine vergleichbar kurzen Siegelzeiten wie unter Verwendung von Ethylen-Copolymerisaten wie beispielsweise EVA, E/AA, E/MAA oder dergleichen zu erzielen. Die genannten Copolymerisate aus Ethylen und α-Olefinen können für eine leichtere Verarbeitbarkeit bei in etwa gleichbleibender Nahtfestigkeit mit verzweigten Polymeren wie PE-LD abgemischt werden. Auf diese Weise kann auch die Siegelanspringtemperatur bei Bedarf zu niedrigeren Werten hin verschoben werden.

In der Patentliteratur werden in diesem Zusammenhang die folgenden Aufbauten beschrieben:

EP 560 495 legt eine fünfschichtige Folie mit dem Aufbau Ethylen-Polymer|HV|EVOH|HV|Ethylen-Polymer offen, wobei die Haftvermittlerschichten Copolymere aus einer ungesättigten Carboxylsäure oder einem ihrer Derivate mit Propylen bzw. Copolymere aus einer ungesättigten Carboxylsäure oder einem ihrer Derivate mit α-Olefin/Propylen-Copolymeren enthalten. Diese Folie ist nach vorhergehender Verstreckung unter Wärmeeinfluß schrumpffähig und zeichnet sich durch hohe Knickbruchfestigkeit, hohe Siegelfestigkeit sowie hohe Zähigkeit aus.

EP 561 428 offenbart eine fünf- oder siebenschichtige Folie mit dem Aufbau Polymer|HV|EVOH|HV|Polymer bzw. Polymer|HV|PA|EVOH|PA|HV|Polymer, die wiederum nach vorhergehender Verstreckung unter Wärmeeinfluß schrumpffähig ist.

In US 4 726 984 wird ein fünfschichtiger Aufbau (E/P + PP)|HV|EVOH|HV|(E/P + PP) offengelegt, der hohe Verpackungsgeschwindigkeiten ermöglichen soll.

US 4 547 433 offenbart eine fünfschichtige Struktur PE-1|HV|EVOH|HV|PE-2, wobei PE-1 und PE-2 jeweils ein PE-LLD und gegebenenfalls zusätzliche Anteile eines EVA-Copolymers enthalten. Die Schicht PE-1 ist dabei vernetzt, während PE-2 für eine bessere Versiegelbarkeit unvernetzt ist. Die Folie ist dadurch nach Verstreckung gut schrumpffähig.

Den genannten Aufbauten ist gemeinsam, daß sie im Verbund mit einem Substrat keine hermetisch dichte Versiegelung mit guter Kanülendichtigkeit bei einem für hohe Verpackungsgeschwindigkeiten geeigneten Hottack und ausreichend hoher Siegelnahtfestigkeit erreichen.

Es stellte sich daher die Aufgabe, eine siegelbare, hoch sauerstoffsperrende Kaschierfolie für Packstoffe bereitzustellen, die sowohl einen hohen Hottack als auch eine hermetisch dichte Versiegelung mit guter Kanülendichtigkeit bei kurzen Siegelzeiten ermöglicht und damit im Verbund eines dieses Siegelmedium enthaltenden Packstoffs höhere Abpackgeschwindigkeiten zuläßt. Daneben soll die Siegelschicht eine ausreichend hohe Siegelnahtfestigkeit aufweisen.

Erfindungsgemäß gelang dies durch eine Kaschierfolie, die eine innere Schicht (d) aus einem Ethylen/Vinylalkohol-Copolymer (EVOH) enthält, die von haftvermittelnden Schichten (c) und (e) eingeschlossen wird. Auf der Kaschierseite dieses Verbundes enthält die erfindungsgemäße Kaschierfolie wenigstens eine weitere Schicht (f) und auf der Siegelseite eine äußere Schicht (a) und wenigstens eine weitere Schicht (b), die jeweils ein thermoplastisches Polymer oder Mischungen aus thermoplastischen Polymeren enthalten. Die erfindungsgemäße Kaschierfolie ist außerdem dadurch gekennzeichnet, daß mit Ausnahme der EVOH enthaltenden Schicht (d) und gegebenenfalls der die EVOH-Schicht einschließenden haftvermittelnden Schichten (c) und (e), die Schichten (b) und (f) sowie jede der weiteren, ein thermoplastisches Polymer oder Mischungen thermoplastischer Polymere enthaltenden und nicht auf der Siegelseite außen befindlichen Schichten eine um wenigstens 5°C niedrigere Erweichungstemperatur aufweisen als die auf der Siegelseite außen befindliche Schicht (a)

Die erfindungsgemäße siegelbare, mehrschichtige Kaschierfolie zeichnet sich durch eine hohe Sauerstoffsperrwirkung sowie verbesserte Siegeleigenschaften, insbesondere durch eine Kombination aus hoher Siegelnahtfestigkeit unmittelbar nach der Versiegelung und einer schnellen hermetisch dichten Versiegelbarkeit ohne die Bildung von Kanülen in der Siegelnaht aus. Dadurch lassen sich im Verbund mit einem Substrat sehr hohe Verarbeitungsgeschwindigkeiten auf Verpackungsmaschinen üblicher Bauart erreichen.

Bevorzugt besteht die erfindungsgemäße Kaschierfolie aus einer siegelseitig außenliegenden Schicht (a), zur Kaschierseite hin gefolgt von einer thermoplastischen Schicht (b), wiederum gefolgt von einer haftvermittelnden Schicht (c), einer ein Ethylen/Vinylalkohol-Copolymerisat enthaltenden Schicht (d), einer weiteren haftvermittelnden Schicht (e), einer weiteren thermoplastischen Schicht (f), wobei die Erweichungstemperaturen der Schichten (b) und (f) niedriger sind als die Erweichungstemperatur der Schicht (a). Dabei ist die Erweichungstemperatur der Schichten (b) und (f) vorzugsweise 5°C, besonders bevorzugt 10°C niedriger als die Erweichungstemperatur der Schicht (a).

In bevorzugter Form sind auch die Erweichungstemperaturen der die Schichten (c) und (e) ausmachenden Materialzusammensetzungen niedriger als die Erweichungstemperatur des die Schicht (a) bildenden Materials.

Besonders günstig ist eine Ausführung der erfindungsgemäßen Kaschierfolie, in der auch die Erweichungstemperaturen der haftvermittelnden Schichten (c) und (e) um wenigstens 5°C, in besonders bevorzugter Form wenigstens 10°C niedriger sind als die Erweichungstemperatur des die Schicht (a) bildenden Materials.

Vorzugsweise weist die Schicht (a) der erfindungsgemäßen Kaschierfolie eine Dicke wenigstens 3 µm und höchstens 30 µm, in noch geeigneterer Form von höchstens 15 µm und in besonders bevorzugter Ausführung von höchstens 10 µm auf.

Die Summe der Flächengewichte der Schichten (b) und (f) sowie weiterer Schichten, die eine niedrigere Erweichungstemperatur als die Schicht (a) haben, beträgt, bezogen auf das Flächengewicht der gesamten Kaschierfolie, vorzugsweise wenigstens 30 %, besser wenigstens 40 %, besonders bevorzugt wenigstens 50 %.

Die Dicke der Schicht (d) beträgt vorzugsweise 3 bis 15 µm, besser 4 bis 10 µm und besonders bevorzugt zwischen 4 und 8 µm.

Die Schichten (a), (b) und (f) sowie gegebenenfalls weitere, ein thermoplastisches Polymer oder Mischungen thermoplastischer Polymere enthaltenden Schichten enthalten bevorzugt Polymere oder Mischungen aus Polymeren aus der Gruppe umfassend Polypropylen (PP), Copolymerisate aus Ethylen und Propylen (E/P), Copolymerisate aus Ethylen und Vinylacetat (EVA), besonders bevorzugt mit einem Vinylacetat-Gehalt, bezogen auf das Gesamtgewicht des Polymers, von höchstens 20 %, Copolymerisate aus Ethylen und ungesättigten Estern wie Butylacrylat oder Ethylacrylat (E/BA bzw. E/EA), Copolymerisate aus Ethylen und ungesättigten Carbonsäuren (E/AA, E/MAA), besonders bevorzugt mit einem Gehalt des Carbonsäurecomonomers, bezogen auf das Gesamtgewicht des Polymers, von höchstens 15 %, in noch weiter bevorzugter Form höchstens 8 %, Salze der Copolymerisate aus Ethylen und ungesättigten Carbonsäuren, insbesondere E/MAA, (Ionomere), besonders bevorzugt mit einem Gehalt des Carbonsäurecomonomers, bezogen auf das Gesamtgewicht des Ionomers, von höchstens 15 %, in noch weiter bevorzugter Form höchstens 10 %, Polybutylen, Polyethylen niedriger Dichte (PE-LD), besonders bevorzugt in einer Dichte von wenigstens 0,91 g/cm³ und höchstens 0,935 g/cm³, Polyethylen hoher Dichte (PE-HD), Copolymerisate (PE-LLD) aus Ethylen und α-Olefinen mit wenigstens 3 C-Atomen, wie insbesondere Buten, Hexen, Octen, 4-Methyl-1-Penten. Die Copolymerisate (PE-LLD) aus Ethylen und α-Olefinen können mit konventionellen Katalysatoren oder mit Metallocen-Katalysatoren hergestellt sein. Besonders bevorzugt sind daraus Copolymerisate (PE-LLD) aus Ethylen und α-Olefinen mit einer Dichte von wenigstens 0,90 g/cm³ und höchstens 0,94 g/cm³.

Die Schicht (a) enthält aus den genannten Polymeren vorzugsweise PE-LLD, PE-LD, EVA, E/AA, E/MAA oder Ionomere bzw. Mischungen aus den genannten Stoffen. Besonders bevorzugt sind auch Ausführungen mit Mischungen aus PE-LLD und einem verzweigten Polymer wie EVA oder bevorzugt PE-LD, wobei der Gewichtsanteil des PE-LLD in dieser Mischung zwischen 50 % und 100 % beträgt. Das PE-LLD kann dabei entweder mit Ziegler-Natta-Katalysatoren oder mit Metallocen-Katalysatoren hergestellt sein. Günstig ist eine Ausführung der Schicht (a) mit einer Zusammensetzung mit einer Schmelzflußrate, gemessen bei 190°C und einer Auflagemasse von 2,16 kg, von wenigstens 0,1 g/10 min und höchstens 3 g/10 min, besonders bevorzugt wenigstens 0,5 g/10 min und höchstens 2 g/10 min.

Günstig ist auch eine Ausführung, in der die Schicht (a) ein Ionomer der oben beschriebenen Art enthält. In diesem Fall erweist sich auch ein Aufbau der erfindungsgemäßen Schichtenfolge als günstig, der in Schicht (b) ein Copolymerisat aus Ethylen und ungesättigten Carbonsäuren (E/AA, E/MAA) enthält.

Die Schichten (b) und (f) enthalten aus den obengenannten Polymeren besonders bevorzugt Polymere oder Mischungen aus Polymeren aus der Gruppe EVA, besonders bevorzugt mit einem Vinylacetat-Gehalt, bezogen auf das Gesamtgewicht des Polymers, von wenigstens 4 % und höchstens 20 %, PE-LD, besonders bevorzugt in einer Dichte von wenigstens 0,91 g/cm³ und höchstens 0,925 g/cm³, E/AA oder E/MAA, besonders bevorzugt mit einem Gehalt des Carbonsäurecomonomers, bezogen auf das Gesamtgewicht des Polymers, von wenigstens 4 % und höchstens 15 %, in noch weiter bevorzugter Form wenigstens 4 % und höchstens 8 %. Die Schichten (b) und (f) enthalten bevorzugt eine Zusammensetzung mit einer Schmelzflußrate, gemessen bei 190°C und einer Auflagemasse von 2,16 kg, von wenigstens 0,1 g/10 min und höchstens 3 g/10 min, besonders bevorzugt wenigstens 0,5 g/10 min und höchstens 2 g/10 min.

Die Schicht (d) enthält bevorzugt wenigstens 50 Gewichts-%, bezogen auf ihr Gesamtgewicht, eines EVOH mit wenigstens 40 und höchstens 85 Mol-% Vinylacetat, das zu wenigstens 90 % verseift ist.

Die Schichten (c) und (e) enthalten einen extrudierbaren Haftvermittler. Als solcher werden bevorzugt modifizierte Polyolefine wie insbesondere Polyethylen, Polypropylen, Ethylen/Propylen-Copolymerisate, Ethylen/α-Olefin-Copolymerisate oder Ethylen/Vinylacetat-Copolymerisate eingesetzt, die mit mindestens einem Monomer aus der Gruppe der α,β-einfach ungesättigten Dicarbonsäuren, wie insbesondere Maleinsäure, Fumarsäure, Itaconsäure oder deren Säureanhydriden, Säureestern, Säureamiden und Säureimiden, gepfropft sind. Als extrudierbare Haftvermittler können daneben Copolymerisate von Ethylen mit α,β-einfach ungesättigten Dicarbonsäuren, wie Acrylsäure, Methacrylsäure und/oder deren Metallsalze mit Zink oder Natrium und/oder deren Alkyl(C₁-C₄)ester, die auch mit mindestens einem Monomer aus der Gruppe der α,β-einfach ungesättigten Dicarbonsäuren, wie insbesondere Maleinsäure, Fumarsäure, Itaconsäure oder deren Säureanhydriden, Säureestern, Säureamiden und Säureimiden, gepfropft sein können, zum Einsatz kommen. Daneben können auch Polyolefine wie insbesondere Polyethylen, Polypropylen, Ethylen/Propylen-Copolymerisate oder Ethylen/α-Olefin-Copolymerisate, die mit Copolymerisaten von Ethylen mit α,β-einfach ungesättigten Dicarbonsäuren, wie Acrylsäure, Methacrylsäure und/oder deren Metallsalzen mit Zink oder Natrium und/oder deren Alkyl(C₁-C₄)estern, gepfropft sind, zum Einsatz kommen. Besonders geeignet als Haftvermittler sind Polyolefine, insbesondere Ethylen/α-Olefin-Copolymerisate mit aufgepfropftem α,β-einfach ungesättigten Dicarbonsäureanhydrid, insbesondere Maleinsäureanhydrid. Die Schichten (c) und (e) können auch ein Ethylen/Vinylacetat-Copolymerisat, vorzugsweise mit einem Vinylacetatgehalt von wenigstens 20 Gewichts-%, enthalten.

In einer speziellen Ausführung der Kaschierfolie enthält die Schicht (a), die Schicht (b) oder beide Schichten neben den bereits genannten Polymeren einen weiteren, mit den in Schicht (a) enthaltenen Polymeren nicht mischbaren thermoplastischen Rohstoff zur Erzielung einer peelfähigen Versiegelung. Der thermoplastische Rohstoff ist vorzugsweise Polybutylen. Günstige Konzentrationen des thermoplastischen Rohstoffs liegen zwischen 5 und 25 Gewichts-%, bezogen auf das Gesamtgewicht der Schicht, in der der thermoplastische Rohstoff enthalten ist.

Alle oder einzelne Schichten der Kaschierfolie können zusätzlich mit üblichen Additiven ausgestattet sein, die die Funktionalität der Folie verbessern. Beispiele sind als Antiblockmittel bekannte feste anorganische Partikel, die aus der äußeren Oberfläche der Siegelschicht hervortreten und auf diese Weise das Gleitverhalten der Folie verbessern. Hierfür geeignet sind Siliziumoxid, Calciumcarbonat, Magnesiumsilikat, Aluminiumsilikat, Calciumphosphat, Talkum und dergleichen. Bevorzugt kommt daraus Siliciumdioxid zum Einsatz. Wirksame Mengen liegen im Bereich von 0,05 bis 2 Gewichts-%, vorzugsweise 0,1 bis 0,8 Gewichts-%. Die mittlere Teilchengröße liegt zwischen 1 und 10 µm, bevorzugt 2 und 5 µm, wobei hier Teilchen mit kugelförmiger Gestalt besonders geeignet sind. Vorzugsweise werden diese Partikel nur in der Schicht (a) eingesetzt.

Andere Additive, die die Gleitfähigkeit der Folie, auch in Zusammenwirken mit den genannten festen Partikeln, verbessern, sind die üblicherweise als Gleitmittel bezeichneten höheren aliphatischen Säureamide, höhere aliphatische Säureester, Wachse, Metallseifen sowie Polydimethylsiloxane. Die wirksame Menge an Gleitmittel liegt im Bereich von 0,01 bis 3 Gewichts-%, vorzugsweise 0,02 bis 1 Gewichts-%. Besonders geeignet ist der Zusatz von höheren aliphatischen Säureamiden im Bereich von 0,01 bis 0,25 Gewichts-%. Ein insbesondere für die obengenannten, in der Kaschierfolie verwendeten, Polymere geeignetes aliphatisches Säureamid ist Erucasäureamid.

Die erfindungsgemäße Kaschierfolie kann durch Zugabe von üblichen Farbstoffen oder Pigmenten eingefärbt werden.

Die erfindungsgemäße Kaschierfolie kann daneben andere übliche Additive wie Antifogmittel oder Antistatika enthalten. Bevorzugt werden hier Ester aus Fettsäuren eingesetzt. Besonders geeignet sind, gegebenenfalls ethoxylierte, Ester aus Carbonsäuren und mehrwertigen Alkoholen, insbesondere aus Sorbinsäure, Stearinsäure oder Ölsäure und Glycerin.

In bevorzugter Form wird die Kaschierfolie auf der Kaschierseite zur Erzielung einer erhöhten Oberflächenspannung mit üblichen Verfahren vorbehandelt.

Mit der erfindungsgemäßen mehrlagigen Kaschierfolie gelingt es, ein in einen Packstoff integrierbares hoch sauerstoffsperrendes Siegelmedium bereitzustellen, das sich nicht nur durch einen guten Hottack, sondern überraschenderweise zusätzlich durch eine hohe Kanülendichtigkeit auszeichnet. Ein die erfindungsgemäße Kaschierfolie enthaltender Packstoff ermöglicht auf Verpackungsmaschinen üblicher Bauart unerwartet hohe Abpackgeschwindigkeiten bei niedrigem Anteil undichter oder mangelhaft versiegelter Packungen.

Ein weiterer Gegenstand der Erfindung ist daher ein die erfindungsgemäße siegelbare, mehrschichtige Kaschierfolie enthaltender Packstoff sowie die Verwendung dieses Packstoffs insbesondere für die Verpackung von Lebensmitteln und Genußmitteln, medizinischen Produkten sowie Produkten jeglicher Art, die mit einer modifizierten Atmosphäre deren Zusammensetzung nicht der Umgebungsluft entspricht, abgepackt werden oder in Gegenwart von Feuchtigkeit und/oder Sauerstoff verderblich sind.

Die erfindungsgemäße Kaschierfolie sowie der sie enthaltende Packstoff läßt sich auf üblichen Anlagen zur Produktion von Mehrschichtverbunden herstellen. Der erfindungsgemäße, die Kaschierfolie enthaltende Packstoff ist ein Verbund mit einem flexiblen Substrat vorzugsweise aus Papier, Pappe, Karton, Metall, Textilien oder Kunststoff, insbesondere ausgewählt aus der Gruppe aus Papier, Aluminium, Zellglas, Polypropylen, Polyalkylenterephthalat, Polyamid, Polycarbonat, Polyvinylalkohol, EVOH, Polystyrol oder Kombinationen daraus sein, wobei die thermoplastischen Substrate gereckt oder ungereckt sein können.

Das Substrat und die erfindungsgemäße Kaschierfolie werden getrennt vorgefertigt und durch Verwendung eines Kaschierklebstoffs zum erfindungsgemäßen Packstoff verbunden.

Dabei kann die erfindungsgemäße Kaschierfolie durch Coextrusion als Blasfolie oder als Flachfolie auf üblichen Anlagen hergestellt werden. Die erfindungsgemäße mehrlagige Siegelschicht kann alternativ auch durch Extrusionsbeschichtung, das heißt dem Auftrag einer oder mehrerer Schichten der Kaschierfolie in geschmolzenem Zustand auf die im festen Zustand vorliegenden übrigen Schichten, oder durch Extrusionskaschierung, das heißt dem Auftrag einer oder mehrerer geschmolzener Schichten der Kaschierfolie zwischen zwei in festem Zustand vorliegende Schichten der Kaschierfolie, hergestellt werden.

Die erfindungsgemäße Kaschierfolie kann auch einem Reckvorgang unterzogen werden. Die Orientierung kann nur in Längsrichtung, nur in Querrichtung, zuerst in Längs- und anschließend in Querrichtung, simultan in Längs- und Querrichtung oder in Kombinationen aus diesen Schritten erfolgen. Dabei kann die Reckung mit der erfindungsgemäßen Kaschierfolie allein oder mit dem sie enthaltenden Packstoff durchgerührt werden.

### Beispiele

### Beispiel 1

Eine Kaschierfolie mit dem Aufbau EVA|HV-1|EVOH|HV-1|EVA|(80 % PE-LLD + 20 % PE-LD-1) mit den Schichtdicken 10|5|5|5|20|5 µm wurde durch Coextrusion als Blasfolie hergestellt und mit einem Kaschierkleber gegen handelsübliches biaxial gerecktes Polyamid der Dicke 15 µm zu einem Packstoff laminiert.

PE-LD-1 hat eine Dichte von 0,923 g/cm³, einen Schmelzpunkt von 108°C, einen Erweichungspunkt von 96°C sowie einen MFR von 2 g/10min und ist mit 500 ppm Erucasäureamid und 1000 ppm Siliziumoxid der mittleren Teilchengröße 15 µm ausgerüstet. PE-LLD ist ein Ethylen-Octen-Copolymerisat mit einer Dichte von 0,920 g/cm³, einem Schmelzpunkt von 124°C, einem Erweichungspunkt von 100°C sowie einem MFR von 1,1 g/10 min. EVA hat einen Vinylacetatgehalt von 4,5 %, eine Dichte von 0,928 g/cm³, einen Schmelzpunkt von 105°C, einen Erweichungspunkt von 87°C sowie einen MFR von 2 g/10min. HV-1 ist ein mit Maleinsäureanhydrid gepropftes EVA mit einer Dichte von 0,935 g/cm³, einem Schmelzpunkt von 100°C, einem Erweichungspunkt von 77°C sowie einem MFR von 2 g/10min. EVOH ist ein Ethylen/Vinylalkohol-Copolymerisat mit einem Ethylengehalt von 32 %, einem Schmelzpunkt von 183°C und einem MFR von 1,7 g/10min.

### Vergleichsbeispiel 2

Packstoff aus Beispiel 1, wobei die Siegelschicht den Aufbau (80 % PE-LLD + 20% PE-LD-1)|HV-2|EVOH|HV-2|(80 % PE-LLD + 20 % PE-LD-1) mit den Schichtdicken 15|5|5|5|20 µm und Materialien wie in Beispiel 1 hat und wie in Beispiel 1 hergestellt wurde. HV-2 ist ein mit Maleinsäureanhydrid gepropftes PE-LLD mit einer Dichte von 0,920 g/cm³, einem Schmelzpunkt von 124°C, einem Erweichungspunkt von 98°C sowie einem MFR von 2 g/10min.

### Vergleichsbeispiel 3

Packstoff aus Beispiel 1, wobei die Siegelschicht den Aufbau EVA|HV-1|EVOH|HV-1|EVA mit den Schichtdicken 15|5|5|5|20 µm und Materialien wie in Beispiel 1 bzw. Vergleichsbeispiel 2 hat und wie in Beispiel 1 hergestellt wurde.

An der beispielhaften erfindungsgemäßen Folie sowie an den Vergleichsbeispielen wurden die folgenden Eigenschaften gemessen:
- Siegelfestigkeit
   Aus der zu prüfenden Folienbahn werden zwei fehlerfreie, saubere Probenstreifen entnommen. Zur Siegelung werden sie mit den zu versiegelnden Flächen aufeinandergelegt und so zwischen die Siegelbacken gehalten, daß die Probe an jeder Seite mindestens 1 cm übersteht. Die Siegelung erfolgt senkrecht zur Folienlaufrichtung. Die Siegelbacken sind glatt und beidseitig auf die Nenn-Siegeltemperatur beheizt. Die Siegelung erfolgt standardmäßig für 0,5 Sekunden mit einem Druck von 50 N/cm². Es wurden auch exemplarisch Vergleichsmessungen für kürzere Siegelzeiten durchgeführt. In den nachstehenden Tabellen beziehen sich ohne Angabe der Siegelzeit aufgeführte Daten stets auf eine Siegelzeit von 0,5 s. Davon abweichende Prüfbedingungen werden angegeben. Aus der so hergestellten Siegelnaht wird nach dem Erkalten ein 15 mm breiter Prüfstreifen ausgeschnitten und auf einer Zugprüfmaschine mit einer Geschwindigkeit von 100 mm/min und einer Einspannlänge von 20 mm getestet. Dabei wird der Maximalwert der zum Zertrennen der versiegelten Folien erforderlichen Kraft als Siegelfestigkeit aufgezeichnet.
- Hottack-Kraft
   Aus dem zu prüfenden Material werden in Laufrichtung ca. 90 mm lange und 45 mm breite Probestreifen entnommen, die mit den versiegelnden Seiten gegeneinander in die Probenhalterung gespannt werden. Die Siegelung erfolgt mit den gleichen Bedingungen hinsichtlich Siegelwerkzeug, Druck und Zeit wie für die Siegelfestigkeit, d.h. über einen 20 mm breiten Bereich. Unmittelbar nach Beendigung der Siegelprüfung erfolgt die Festigkeitsprüfung der warmen Siegelnaht mit einer Abzugsgeschwindigkeit von 25 m/min. Der Kraftverlauf wird elektronisch gemessen und mittels PC gespeichert. Der Höchstwert der Kraft wird aus einer graphischen Darstellung des Kraftverlaufs abgelesen.
- Nahtdichtigkeit
   Das zu prüfende Material wird im Format 20 x 20 cm ausgeschnitten und an einer Kante mit den zu versiegelnden Seiten zusammengelegt. Diese Kante wird anschließend in der unter "Siegelfestigkeit" beschriebenen Art und Weise versiegelt, die entstandene Siegelnaht wird als "Längsnaht" bezeichnet. Der so gebildete Schlauch wird dann auf einer der noch offenen Querseiten bei flachgelegter Längsnaht in der gleichen Weise versiegelt. Dabei bildet die flachgelegte Längsnaht eine Falte. In den so geformten Halbbeutel wird in den Nahtzwickel aus Längs- und Quernaht ein ca. 5 mm hoher Sumpf aus mit Methylenblau eingefärbtem Methanol gefüllt. Etwaige Kanülen in der Naht werden durch die durch sie hindurchdringende Methylenblau-Lösung angezeigt. Es wird notiert, ob Undichtigkeiten auftreten oder ob die Quernaht über die gesamte Breite dicht versiegelt ist.

Die Ergebnisse sind in untenstehender Tabelle zusammengefaßt:

| Merkmal | Einheit | Beispiel bzw. Vergleichsbeispiel | | |
|---|---|---|---|---|
| | | Bsp. 1 | Vgl. 2 | Vgl. 3 |
| Siegelfestigkeit bei 90°C | N/15 mm | 0,1 | 0,2 | 1,8 |
| Siegelfestigkeit bei 100°C | N/15 mm | 0,5 | 0,3 | 9,5 |
| Siegelfestigkeit bei 110°C | N/15 mm | 7,5 | 5,8 | 35,4 |
| Siegelfestigkeit bei 120°C | N/15 mm | 40,1 | 43,9 | 33,2 |
| Siegelfestigkeit bei 130°C | N/15 mm | 41,2 | 42 | 32,1 |
| maximale Hottack-Kraft bei 90°C | N/45 mm | 0 | 0 | 2,2 |
| maximale Hottack-Kraft bei 100°C | N/45 mm | 7,3 | 6,9 | 5,9 |
| maximale Hottack-Kraft bei 110°C | N/45 mm | 23,9 | 27,3 | 7,2 |
| maximale Hottack-Kraft bei 120°C | N/45 mm | 37,5 | 43,1 | 4,5 |
| maximale Hottack-Kraft bei 130°C | N/45 mm | 30,8 | 34,2 | 2,8 |
| Kanülen im Beutel bei Siegelung 100°C | ja/nein | ja | ja | ja |
| Kanülen im Beutel bei Siegelung 110°C | ja/nein | nein | ja | nein |
| Kanülen im Beutel bei Siegelung 120°C | ja/nein | nein | ja | nein |
| Kanülen im Beutel bei Siegelung 130°C | ja/nein | nein | ja | nein |
| Siegelfestigkeit bei 120°C, Siegelzeit = 0,25 s | N/15 mm | 38,9 | 35,6 | 34,1 |
| maximale Hottack-Kraft bei 120°C, Siegelzeit = 0,25 s | N/45 mm | 40,3 | 39,7 | 6,8 |
| Kanülen bei Siegelung 120°C, Siegelzeit = 0,25 s | ja/nein | nein | ja | nein |
| *Eigenschaften von erfindungsgemäßen Folien und Vergleichsmustern* | | | | |

Die geforderte hermetisch dichte Versiegelung wird von der erfindungsgemäßen Siegelschicht in der beispielhaft gezeigten Ausführung also schon bei deutlich niedrigeren Siegeltemperaturen erreicht als bei vergleichbaren Typen nach dem Stand der Technik. Hottack und Siegelfestigkeit werden dabei nicht negativ beeinflußt. Die bei niedrigeren Temperaturen erreichte Kanülenfreiheit bedeutet aber auch, daß dies bei gleicher Siegeltemperatur und verkürzter Siegelzeit möglich ist. Dieser Umstand wurde exemplarisch durch Halbierung der Siegelzeit verifiziert.

## Patentansprüche

1. Siegelbare, mehrschichtige Kaschierfolie, die eine innere Schicht (d) aus einem Ethylen/Vinylalkohol-Copolymer (EVOH) enthält, die von haftvermittelnden Schichten (c) und (e) eingeschlossen wird, und auf der Kaschierseite dieses Verbundes wenigstens eine weitere Schicht (f) und auf der Siegelseite eine äußere Schicht (a) und wenigstens eine weitere Schicht (b) enthält, die jeweils ein thermoplastisches Polymer oder Mischungen aus thermoplastischen Polymeren enthalten, wobei mit Ausnahme der EVOH enthaltenden Schicht (d) und gegebenenfalls der die EVOH-Schicht einschließenden haftvermittelnden Schichten (c) und (e), die Schichten (b) und (f) sowie jede der weiteren, ein thermoplastisches Polymer oder Mischungen thermoplastischer Polymere enthaltenden und nicht auf der Siegelseite außen befindlichen Schichten eine um wenigstens 5 °C niedrigere Erweichungstemperatur aufweisen als die auf der Siegelseite außen befindliche Schicht (a).

2. Kaschierfolie nach Anspruch 1, **dadurch gekennzeichnet, daß** die Erweichungstemperaturen der Schichten (b) und (f) sowie aller weiteren, ein thermoplastisches Polymer oder Mischungen thermoplastischer Polymere enthaltenden Schichten um wenigstens 10°C niedriger sind als die Erweichungstemperatur der Schicht (a).

3. Kaschierfolie nach Anspruch 1 oder 2, **dadurch gekennzeichnet, daß** die Erweichungstemperaturen der haftvermittelnden Schichten (c) und (e) niedriger sind als die Erweichungstemperatur der Schicht (a).

4. Kaschierfolie nach Anspruch 3, **dadurch gekennzeichnet, daß** die Erweichungstemperaturen der Schichten (c) und (e) um wenigstens 5°C, vorzugsweise um wenigstens 10°C niedriger sind als die Erweichungstemperatur der Schicht (a).

5. Kaschierfolie nach einem der Ansprüche 1 bis 4, **dadurch gekennzeichnet, daß** die Dicke der Schicht (a) wenigstens 3 µm und höchstens 30 µm beträgt.

6. Kaschierfolie nach einem der Ansprüche 1 bis 5, **dadurch gekennzeichnet, daß** das Flächengewicht aller Schichten, die eine niedrigere Erweichungstemperatur als die Schicht (a) haben, bezogen auf das Flächengewicht der gesamten Kaschierfolie, in Summe wenigstens 30 % beträgt.

7. Kaschierfolie nach einem der Ansprüche 1 bis 6, **dadurch gekennzeichnet, daß** die Dicke der Schicht (d) 3 bis 15 µm beträgt.

8. Kaschierfolie nach einem der Ansprüche 1 bis 7, **dadurch gekennzeichnet, daß** die Schichten (a), (b) und (f) sowie gegebenenfalls weitere, ein thermoplastisches Polymer oder Mischungen thermoplastischer Polymere enthaltende Schichten Polymere oder Mischungen aus Polymeren aus der Gruppe umfassend Polypropylen, Copolymerisate aus Ethylen und Propylen, Copolymerisate aus Ethylen und Vinylacetat (EVA), Copolymerisate aus Ethylen und ungesättigten Estern wie Butylacrylat oder Ethylacrylat (E/BA bzw. E/EA), Copolymerisate aus Ethylen und ungesättigten Carbonsäuren (E/AA, E/MAA), Salze der Copolymerisate aus Ethylen und ungesättigten Carbonsäuren (Ionomere), Polybutylen, Polyethylen niedriger Dichte (PE-LD), Polyethylen hoher Dichte (PE-HD) und Copolymerisate (PE-LLD) aus Ethylen und α-Olefinen mit wenigstens 3 C-Atomen, die mit konventionellen oder mit Metallocen-Katalysatoren hergestellt sein können, enthalten.

9. Kaschierfolie nach einem der Ansprüche 1 bis 8, **dadurch gekennzeichnet, daß** die Schicht (a) eine Zusammensetzung mit einer Schmelzflußrate, gemessen bei 190°C und einer Auflagemasse von 2,16 kg, von wenigstens 0,1 g/10 min und höchstens 3 g/10 min, enthält.

10. Kaschierfolie nach einem der Ansprüche 1 bis 9, **dadurch gekennzeichnet, daß** die Schichten (c) und/oder (e) einen extrudierbaren Haftvermittler aus der Gruppe der modifizierten Polyolefine mit Carboxylgruppen enthalten, wie Polyethylen, Polypropylen, Ethylen/Propylen-Copolymerisate, Ethylen/α-Olefin-Copolymerisate oder Ethylen/Vinylacetat-Copolymerisate, die mit mindestens einem Monomer aus der Gruppe der α,β-einfach ungesättigten Dicarbonsäuren, wie Maleinsäure, Fumarsäure, Itaconsäure, oder deren Säureanhydriden, Säureestern, Säureamiden und Säureimiden gepfropft sind, oder einen extrudierbaren Haftvermittler ausgewählt oder zusammengesetzt aus der Gruppe der Copolymerisate von Ethylen mit α,β-einfach ungesättigten Dicarbonsäuren, wie Acrylsäure, Methacrylsäure, deren Metallsalzen mit Zink oder Natrium, deren Alkyl(C₁-C₄)estern, oder entsprechenden Pfropfpolymeren auf Polyolefinen wie Polyethylen, Polypropylen, Ethylen/Propylen-Copolymerisaten oder Ethylen/a-Olefin-Copolymerisaten, die mit einem Monomer der genannten ungesättigten Säuren pfropfpolymerisiert sind, oder ein Ethylen/Vinylacetat-Copolymerisat mit einem Vinylacetatgehalt von wenigstens 20 Gewichts-% als extrudierbaren Haftvermittler enthalten.

11. Kaschierfolie nach einem der Ansprüche 1 bis 10, **dadurch gekennzeichnet, daß** eine oder mehrere Schichten organische oder anorganische Additive wie Pigmente, Farbstoffe, Gleitmittel, Antiblockmittel, Antistatika oder Antifogmittel enthält.

12. Kaschierfolie nach einem der Ansprüche 1 bis 11, **dadurch gekennzeichnet, daß** die Kaschierseite zur Erzielung einer erhöhten Oberflächenspannung vorbehandelt ist.

13. Kaschierfolie nach einem der Ansprüche 1 bis 12, **dadurch gekennzeichnet, dass** sie in Längsrichtung, in Querrichtung oder in Längs- und Querrichtung orientiert ist.

14. Packstoff enthaltend eine Kaschierfolie nach einem der Ansprüche 1 bis 13 in einem Verbund mit einem flexiblen Substrat.

15. Packstoff nach Anspruch 14, **dadurch gekennzeichnet, daß** das flexible Substrat aus Kunststoff, Metall, Karton, Papier, Pappe oder Textilien besteht.

16. Packstoff nach Anspruch 15 **dadurch gekennzeichnet, daß** das flexible Substrat aus der Gruppe aus Papier, Aluminium, Zellglas, Polypropylen, Polyalkylenterephthalat, Polyamid, Polycarbonat, Polyvinylalkohol, EVOH, Polystyrol oder Kombinationen daraus ausgewählt ist, wobei die thermoplastischen Substrate gereckt oder ungereckt sein können.

17. Packstoff nach einem der Ansprüche 14 bis 16, **dadurch gekennzeichnet, dass** der Packstoff in Längsrichtung, in Querrichtung oder Längs- und Querrichtung orientiert ist.

18. Verwendung eines Packstoffs nach Anspruch 14 oder 17 für die Verpackung von Lebensmitteln oder Genußmitteln oder medizinischen Produkten oder anderen Produkten, die in Gegenwart von Feuchtigkeit und/oder Sauerstoff verderblich sind, oder von Produkten, die in einer modifizierten Atmosphäre abgepackt werden.

## Claims

1. Sealable, multilayer laminating film which comprises an inner layer (d) composed of an ethylene/vinyl alcohol copolymer (EVOH) which is enclosed by adhesion-promoting layers (c) and (e) and comprises, on the laminating side of this composite, at least one further layer (f), and, on the sealing side, an outer layer (a) and at least one further layer (b) which each comprise a thermoplastic polymer or mixtures of thermoplastic polymers, in which film, with the exception of the EVOH-containing layer (d) and, if appropriate, of the adhesion-promoting layers (c) and (e) enclosing the EVOH layer, the layers (b) and (f) and also each of the further layers which comprise a thermoplastic polymer or mixtures of thermoplastic polymers and are not disposed externally on the sealing side have a softening temperature at least 5°C lower than the layer (a) disposed externally on the sealing side.

2. Laminating film according to Claim 1, **characterized in that** the softening temperatures of the layers (b) and (f) and also all further layers which comprise a thermoplastic polymer or mixtures of thermoplastic polymers are at least 10°C lower than the softening temperature of the layer (a).

3. The laminating film according to Claim 1 or 2, **characterized in that** the softening temperatures of the adhesion-promoting layers (c) and (e) are lower than the softening temperature of the layer (a).

4. Laminating film according to Claim 3, **characterized in that** the softening temperatures of the layers (c) and (e) are at least 5°C lower, preferably at least 10°C lower, than the softening temperature of the layer (a).

5. Laminating film according to one of Claims 1 to 4, **characterized in that** the thickness of the layer (a) is at least 3 µm and at most 30 µm.

6. Laminating film according to one of Claims 1 to 5, **characterized in that** the basis weight of all layers which have a lower softening temperature than the layer (a), based on the basis weight of the overall laminating film, is in total at least 30%.

7. Laminating film according to one of Claims 1 to 6, **characterized in that** the thickness of the layer (d) is 3 to 15 µm.

8. Laminating film according to one of Claims 1 to 7, **characterized in that** the layers (a), (b) and (f) and also any further layers comprising a thermoplastic polymer or mixtures of thermoplastic polymers comprise polymers or mixtures of polymers from the group comprising polypropylene, copolymers of ethylene and propylene, copolymers of ethylene and vinyl acetate (EVA), copolymers of ethylene and unsaturated esters such as butyl acrylate or ethyl acrylate (E/BA and E/EA respectively), copolymers of ethylene and unsaturated carboxylic acids (E/AA, E/MAA), salts of the copolymers of ethylene and unsaturated carboxylic acids (ionomers), polybutylene, low-density polyethylene (LDPE), high-density polyethylene (HDPE) and copolymers (LLDPE) of ethylene and α-olefins having at least 3 carbon atoms, which may be prepared with conventional or with metallocene catalysts.

9. Laminating film according to one of Claims 1 to 8, **characterized in that** the layer (a) has a composition with a melt flow rate, measured at 190°C and a load of 2.16 kg, of at least 0.1 g/10 min and at most 3 g/10 min.

10. Laminating film according to one of Claims 1 to 9, **characterized in that** the layers, (c) and/or (e) comprise an extrudable adhesion promoter from the group of the modified polyolefins having carboxyl groups, such as polyethylene, polypropylene, ethylene/propylene copolymers, ethylene/α-olefin copolymers or ethylene/vinyl acetate copolymers, each of which has been grafted with at least one monomer from the group of the α,β-monounsaturated dicarboxylic acids such as maleic acid, fumaric acid, itaconic acid, or their anhydrides, esters, amides and imides, or an extrudable adhesion promoter selected from or composed of the group of copolymers of ethylene with α,β-monounsaturated dicarboxylic acids such as acrylic acid, methacrylic acid, their metal salts with zinc or sodium, their alkyl(C₁-C₄) esters, or corresponding graft polymers onto polyolefins such as polyethylene, polypropylene, ethylene/propylene copolymers or ethylene/α-olefin copolymers, each of which is graft-polymerized with a monomer of the unsaturated acids mentioned, or comprise an ethylene/vinyl acetate copolymer having a vinyl acetate content of at least 20% by weight as the extrudable adhesion promoter.

11. Laminating film according to one of Claims 1 to 10, **characterized in that** one or more layers comprises organic or inorganic additives such as pigments, dyes, lubricants, antiblocking agents, antistats or antifogging agents.

12. Laminating film according to one of Claims 1 to 11, **characterized in that** the laminating side has been pretreated to achieve elevated surface tension.

13. Laminating film according to one of Claims 1 to 12, **characterized in that** it has been oriented in longitudinal direction, in transverse direction or in longitudinal and transverse direction.

14. Packaging material comprising a laminating film according to one of Claims 1 to 13 in a composite with a flexible substrate.

15. Packaging material according to Claim 14, **characterized in that** the flexible substrate consists of plastic, metal, cardboard, paper, paperboard or textiles.

16. Packaging material according to Claim 15, **characterized in that** the flexible substrate is selected from the group of paper, aluminium, cellophane, polypropylene, polyalkylene terephthalate, polyamide, polycarbonate, polyvinyl alcohol, EVOH, polystyrene or combinations thereof, the thermoplastic substrates being stretched or unstretched.

17. Packaging material according to one of Claims 14 to 16, **characterized in that** the packaging material has been oriented in longitudinal direction, in transverse direction or longitudinal and transverse direction.

18. Use of a packaging material according to Claim 14 or 17 for the packaging of foods or other consumable products or medical products or other products which are perishable in the presence of moisture and/or oxygen, or of products which are packaged in a modified atmosphere.

## Revendications

1. Film stratifié en plusieurs couches, apte à être scellé, qui contient une couche intérieure (d) en un copolymère d'éthylène et d'alcool vinylique (EVOH) intercalée entre des couches adhésives (c) et (e) et qui contient au moins une autre couche (f) sur le côté extérieur de ce composite ainsi que sur le côté de scellement une couche extérieure (a) et au moins une autre couche (b) qui contiennent toutes deux un polymère thermoplastique ou des mélanges de polymères thermoplastiques, et dans lequel, à l'exception de la couche (d) qui contient de l'EVOH et éventuellement des couches (c) et (e) entre lesquelles la couche d'EVOH est intercalée, les couches (b) et (f) ainsi que les autres couches qui contiennent un polymère thermoplastique ou des mélanges de polymères thermoplastiques et qui ne sont pas des couches extérieures situées sur le côté de scellement ont toutes une température d'amollissement plus basse d'au moins 5°C que celle de la couche extérieure (a) située sur le côté de scellement.

2. Film stratifié selon la revendication 1, **caractérisé en ce que** la température d'amollissement des couches (b) et (f) et de toutes les autres couches qui contiennent un polymère thermoplastique ou des mélanges de polymères thermoplastiques est plus basse d'au moins 10°C que celle de la couche (a).

3. Film stratifié selon les revendications 1 ou 2, **caractérisé en ce que** la température d'amollissement des couches adhésives (c) et (e) est plus basse que celle de la couche (a).

4. Film stratifié selon la revendication 3, **caractérisé en ce que** la température d'amollissement des couches (c) et (e) est plus basse d'au moins 5°C et de préférence d'au moins 10°C que celle de la couche (a).

5. Film selon l'une des revendications 1 à 4, **caractérisé en ce que** l'épaisseur de la couche (a) est d'au moins 3 µm et d'au plus 30 µm.

6. Film stratifié selon l'une des revendications 1 à 5, **caractérisé en ce que** le poids total par unité de surface de toutes les couches dont la température d'amollissement est plus basse que celle de la couche (a) est au moins égal à 30 % du poids par unité de surface de l'ensemble du film stratifié.

7. Film stratifié selon l'une des revendications 1 à 6, **caractérisé en ce que** l'épaisseur de la couche (d) est comprise entre 3 µm et 15 µm.

8. Film stratifié selon l'une des revendications 1 à 7, **caractérisé en ce que** les couches (a), (b) et (f) et éventuellement des autres couches qui contiennent un polymère thermoplastique ou des mélanges de polymères thermoplastiques contiennent des polymères ou des mélanges de polymères du groupe qui reprend le polypropylène, les copolymères d'éthylène et de propylène, les copolymères d'éthylène et d'acétate de vinyle (EVA), les copolymères d'éthylène et d'esters insaturés comme l'acrylate de butyle ou l'acrylate d'éthyle (E/BA et E/EA), les copolymères d'éthylène et d'acides carboxyliques insaturés (E/AA, E/MAA), les sels de copolymères d'éthylène et d'acides carboxyliques insaturés (ionomères), le polybutylène, le polyéthylène à basse densité (PE-LD), le polyéthylène à haute densité (PE-HD) et les copolymères (PE-LLD) d'éthylène et d'α-oléfines qui comptent au moins 3 atomes de C, que l'on peut préparer à l'aide de catalyseurs classiques ou de catalyseurs au métallocène.

9. Film stratifié selon l'une des revendications 1 à 8, **caractérisé en ce que** la couche (a) contient une composition dont l'indice d'écoulement à l'état fondu mesuré à 190°C et pour une masse de 2,16 kg est d'au moins 0,1 g/10 min et d'au plus 3 g/10 min.

10. Film stratifié selon l'une des revendications 1 à 9, **caractérisé en ce que** les couches (c) et/ou (e) contiennent comme adhésif extrudable
un adhésif extrudable sélectionné dans le groupe des polyoléfines modifiées qui comprennent des groupes carboxyle, comme le polyéthylène, le polypropylène, les copolymères d'éthylène et de propylène, les copolymères d'éthylène et d'α-oléfines et les copolymères d'éthylène et d'acétate de vinyle sur lesquels est greffé au moins un monomère du groupe des acides dicarboxyliques α,β-mono-insaturés comme l'acide maléique, l'acide fumarique, l'acide itaconique ou leurs anhydrides, esters, amides et imides, ou
un adhésif extrudable sélectionné dans le groupe des copolymères d'éthylène et d'acides dicarboxyliques α,β-mono-insaturés comme l'acide acrylique, l'acide méthacrylique, leurs sels métalliques avec le zinc ou le sodium, leurs esters d'alkyle en C₁ à C₄ ou des polymères greffés correspondants sur des polyoléfines comme le polyéthylène, le polypropylène, les copolymères d'éthylène et de propylène ou les copolymères d'éthylène et d'a-oléfine qui sont polymérisés avec greffage d'un monomère desdits acides insaturés cités ou composé de plusieurs éléments de ce groupe, ou
un copolymère d'éthylène et d'acétate de vinyle dont la teneur en acétate de vinyle est d'au moins 20 % en poids.

11. Film stratifié selon l'une des revendications 1 à 10, **caractérisé en ce qu'**une ou plusieurs couches contiennent des additifs organiques ou minéraux et par exemple des pigments, des colorants, des lubrifiants, des agents antiblocage, des agents antistatiques ou des agents antibuée.

12. Film stratifié selon l'une des revendications 1 à 11, **caractérisé en ce que** le côté extérieur est traité préalablement pour augmenter sa tension superficielle.

13. Film stratifié selon l'une des revendications 1 à 12, **caractérisé en ce qu'**il est orienté longitudinalement, transversalement ou longitudinalement et transversalement.

14. Matériau d'emballage qui contient un film stratifié selon l'une des revendications 1 à 13 et qui présente la forme d'un composite avec un support flexible.

15. Matériau d'emballage selon la revendication 14, **caractérisé en ce que** le support flexible est constitué de matière synthétique, de métal, de carton, de papier, de carton-pâte ou de textile.

16. Matériau d'emballage selon la revendication 15, **caractérisé en ce que** le support flexible est sélectionné dans le groupe qui comprend le papier, l'aluminium, la cellulose régénérée (cellophane), le polypropylène, les poly(téréphtalate d'alkylène), les polyamides, les polycarbonates, le poly(alcool vinylique), les EVOH, les polystyrènes et les combinaisons de ceux-ci, les supports thermoplastiques pouvant être étirés ou non.

17. Matériau d'emballage selon l'une des revendications 14 à 16, **caractérisé en ce qu'**il est orienté longitudinalement, transversalement ou longitudinalement et transversalement.

18. Utilisation d'un matériau d'emballage selon les revendications 14 ou 17 pour l'emballage d'aliments, de produits d'agrément, de produits médicaux ou d'autres produits périssables en présence d'humidité et/ou d'oxygène ou de produits emballés sous atmosphère modifiée.
